# EUROPEAN PATENT APPLICATION

(11) **EP 1 574 888 A1**
(43) Date of publication of application: **14.09.2005**
(21) Application number: 04017304.9
(22) Date of filing: 22.07.2004
(51) Int. Cl.: G02B 6/42

(54) **Optical module, manufacturing method therefor, protective component for a light guide, and protective component having electric wiring**

(30) Priority: 10.03.2004 JP 2004067288
(71) Applicant: FUJITSU LIMITED, Kanagawa 211-8588 (JP)
(72) Inventor: Terada, Koji, c/o Fujitsu Limited, Kawasaki-shi Kanagawa 211-8588 (JP); Matsui, Jun, c/o Fujitsu Limited, Kawasaki-shi Kanagawa 211-8588 (JP); Nobuhara, Hiroyuki, c/o Fujitsu Limited, Kawasaki-shi Kanagawa 211-8588 (JP)
(74) Representative: HOFFMANN EITLE

(57) **Abstract**

According to the present invention, there is provided an optical module made up of an optical element (1), a protective component (3) for protecting an optical transmission medium (3a) to be optically coupled to the optical element (1) and an electric wiring (3b) formed on the protective component 3 in conjunction with the optical element (1). This can reduce the number of principal components constituting the optical module, which realizes a small-size and low-cost optical module.

## Description

### BACKGROUND OF THE INVENTION

### (1) Field of the Invention

The present invention relates to an optical module, manufacturing method therefor, protective component and protective component with electric wiring, for example, to a technique suitable for use in an optical transmission module or optical reception module for data transfer in next-generation server system or the like.

### (2) Description of the Related Art

Since the data transfer in a server system depends upon large-scale parallel transmission, a large number of optical modules are mounted in a parallel fashion. This requires the size reduction and cost reduction with respect to each of the optical modules.

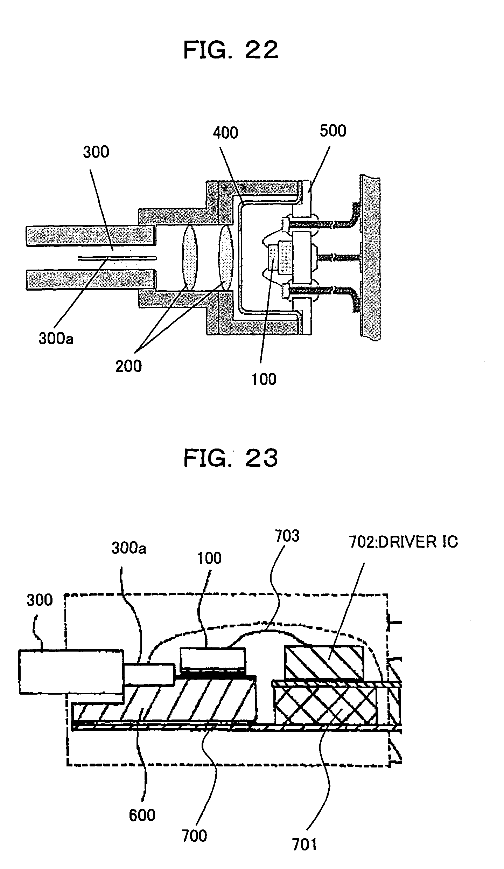

FIG. 22 shows, as a first conventional example, a CAN package type optical module for use in optical communications . As shown in FIG. 22, the conventional CAN package type optical module comprises, as principal components, an optical element 100 such as a laser diode (LD) or photodiode (PD), (two) lenses 200, a ferrule 300 for the protection of an optical fiber 300a, a hermetically-sealing window-made cap 400 for the protection of the optical element 100 and a stem 500; six components in total. The optical axis adjustment (control) is made such that the two-dimensional adjustment is made at two points (two lenses 200) and the one-dimensional adjustment is made at one point (ferrule 300).

FIG. 23 shows, as a second conventional example, an optical module using a silicon (Si) platform developed for the purpose of the drastic cost reduction of the optical module in recent years. The optical module shown in FIG. 23 is proposed in Japanese Patent Laid-Open No. 2003-121707 and comprises, as the principal components, an Si platform (Si bench) 600, a ferrule 300 and an optical element (LD) 100; three components in total. As the optical axis adjustment, the two-dimensional adjustment is made at one point (optical element) . This optical module is of a type in which the ferrule 300 and the optical element 100 are mounted on a surface of the Si platform 600, which has a construction suitable for the loading of an end-face light-reception/emission type optical element [FP-LD (Fabry Perot - LaserDiode) or waveguide type PD]. In FIG. 23, reference numeral 700 represents inter-layer wiring, numeral 701 designates an insulating spacer, and 702 denotes a driver IC connected through an Au wire to the optical element 100 for driving the optical element 100.

However, the above-mentioned first conventional example requires not only the large number of parts but also the large number of optical axis adjustment points, which goes against the size reduction and the cost reduction.

On the other hand, the second conventional example is made in consideration of the loading of an end-face light-reception/emission type optical element and, hence, it is unsuitable for the loading of a standard and low-cost PIN-PD (PIN-Photodiode) as a surface light-emitting element (VCSEL : Vertical Cavity Surface Emitting Laser) or a surface light-receiving element.

### SUMMARY OF THE INVENTION

The present invention has been developed with a view to eliminating these problems and it is therefore an object of the invention to, for realizing a small-size and low-cost optical module, reduce the number of optical module parts and further to cope with the loading of a low-cost surface light-receiving/emitting type optical element (VCSEL, PIN-PD).

For this purpose, in accordance with an aspect of the present invention, there is provided an optical module comprising an optical element, a protective component (member) for protecting an optical transmission medium to be optically coupled to the optical element and an electric wiring formed in the protective component for the optical element.

In addition, a protective component according to another aspect of the present invention has an indentation (cavity-like portion) made in an end portion of a protective component for protection of an optical transmission medium.

Still additionally, in accordance with a further aspect of the present invention, there is provided a method of manufacturing an optical module made up of an optical element, a protective component for protecting an optical transmission medium to be optically coupled to the optical element and an electric wiring for the optical element, wherein, for the optical axis adjustment (alignment) between the optical element and the optical transmission medium, the relative position between the optical element and the optical transmission medium is adjusted while placing an electric wiring of the optical element or an optical element mounted substrate (board) mounted the optical element and an electric wiring formed in the protective component through the use of a non-cured conductive adhesive into conduction for driving the optical element and the conductive adhesive is cured after the adjustment reaches completion.

Yet additionally, in accordance with a further aspect of the present invention, there is provided a method of manufacturing an optical module made up of an optical element, a protective component for protecting an optical transmission medium to be optically coupled to the optical element and an electric wiring for the optical element, wherein, for the optical axis adjustment between the optical element and the optical transmission medium, the relative position between the optical element and the optical transmission medium is adjusted by repeatedly conducting a moving step of placing the optical element into a driving-stopped condition and changing the relative position between the optical element and the optical transmission medium in a state where the optical element or an optical element mounted substrate mounted the optical element is separated from the protective component, an optical element driving step of driving the optical element by bringing an electric wiring of the optical element or the optical element mounted substrate and an electric wiring formed in the protective component into contact with each other, and a detecting step of detecting a magnitude of optical power outputted from the optical element through the optical transmission medium or the magnitude of a light-reception electric signal corresponding to light inputted through the optical transmission medium, and the optical element or the optical element mounted substrate and the protective component are fixedly secured to each other after the adjustment reaches completion.

Moreover, according to a further aspect of the present invention, there is provided an electric wire formed protective component (protective component with an electric wiring) comprising a protective component for protecting an optical transmission medium and an electric wiring formed in the protective component for making an electrical connection with an external circuit.

Thus, the present invention can decrease the number of principal parts of an optical module with respect to the first conventional example mentioned above with reference to FIG. 22 and the second conventional example mentioned above with reference to FIG. 23 and, hence, contributes greatly to the size reduction of the optical module. In addition, since an indentation (cavity-like portion) is made in the protective component for the protection of the optical transmission medium, this indentation can accommodate at least a portion of the optical element, which leads to further size reduction of the optical module while protecting the optical element.

Still moreover, unlike the second conventional example, the present invention can realize a simple mounting structure suitable for the loading of a low-cost surface type optical element (VCSEL or PIN-PD).

In consequence, the present invention contributes greatly to the size reduction and cost reduction needed for an optical transmission module or optical reception module useful for data transfer in the next-generation server system.

### BRIEF DESCRIPTION OF THE DRAWINGS

FIG. 1 is a partially-transparent side-elevational view illustratively showing a construction of an optical module according to a first embodiment of the present invention;
FIGs . 2 (A) and 2 (B) are perspective views illustratively showing an optical element serving as a principal component of the optical module shown in FIG. 1;
FIG. 3 is a perspective view illustratively showing a subcarrier (optical element mounted substrate) on which the optical element shown in FIG. 2 is loaded (mounted);
FIG. 4 is a perspective view illustratively showing a ferrule serving as a principal component of the optical module shown in FIG. 1;
FIG. 5 is a plan view illustratively showing an adhesive applying position of an end surface of the ferrule for explaining a method of manufacturing the optical module shown in FIG. 1;
FIG. 6 is a block diagram showing a structure of an optical axis adjustment system for explaining a method of manufacturing the optical module shown in FIG. 1;
FIG. 7 is a side elevational view illustratively showing a state of an adhesive at the optical axis adjustment by the optical axis adjustment system shown in FIG. 6;
FIG. 8 is an illustrative side elevational view useful for explaining resin sealing at the manufacturing of the optical module shown in FIG. 1;
FIG. 9 is an illustrative side elevational view useful for explaining resin sealing at the manufacturing of the optical module shown in FIG. 1;
FIG. 10 is a partially-transparent side elevational view illustratively showing an optical module according to a second embodiment of the present invention;
FIG. 11 is a perspective view illustratively showing an optical element serving as a principal component of the optical module shown in FIG. 10;
FIG. 12 is a perspective view illustratively showing a ferrule serving as a principal component of the optical module shown in FIG. 10;
FIG. 13 is a block diagram showing a structure of an optical axis adjustment system for explaining a method of manufacturing the optical module shown in FIG. 10;
FIGs. 14(A) to 14(C) are illustrations useful for explaining an optical axis adjustment procedure using the optical axis adjustment system shown in FIG. 13;
FIG. 15 is an illustrative side elevational view useful for explaining the application of a transparent resin at the manufacturing of the optical module shown in FIG. 10;
FIG. 16 is an illustrative side elevational view useful for explaining resin sealing at the manufacturing of the optical module shown in FIG. 10;
FIG. 17 is an illustration useful for explaining a manufacturing process for a ferrule with an electric wiring shown in FIGs. 1 and 4;
FIG. 18 is an illustration useful for explaining a manufacturing process for a ferrule with an electric wiring shown in FIGs. 1 and 4;
FIG. 19 is an illustration useful for explaining a manufacturing process for a ferrule with an electric wiring shown in FIGs. 1 and 4;
FIG. 20 is an illustration useful for explaining a manufacturing process for a ferrule with an electric wiring shown in FIGs. 1 and 4;
FIG. 21 is an illustration useful for explaining a manufacturing process for a ferrule with an electric wiring shown in FIGs. 10 and 12;
FIG. 22 is an illustrative perspective side elevational view showing the interior of a CAN package type optical module of a first conventional example; and
FIG. 23 is a side elevational view illustratively showing a construction of an optical module using a silicon platform which forms a second conventional example.

### DESCRIPTION OF THE PREFERRED EMBODIMENTS

### [A] Description of First Embodiment

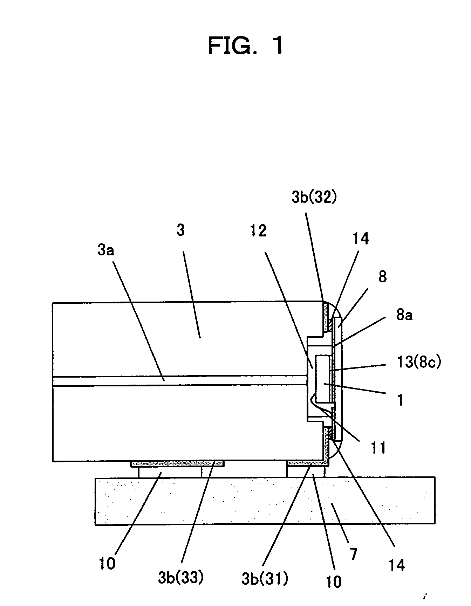

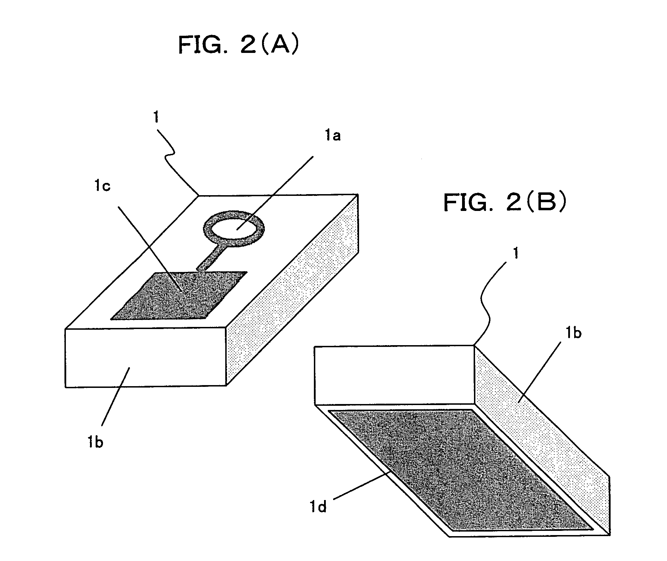

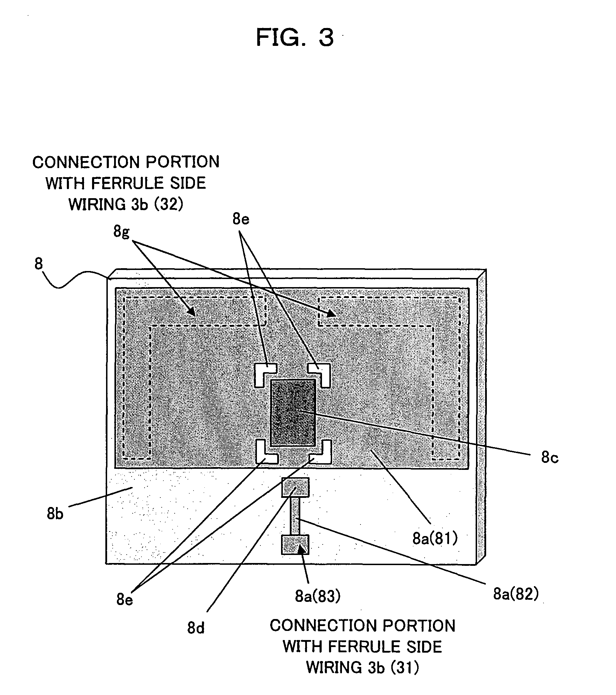

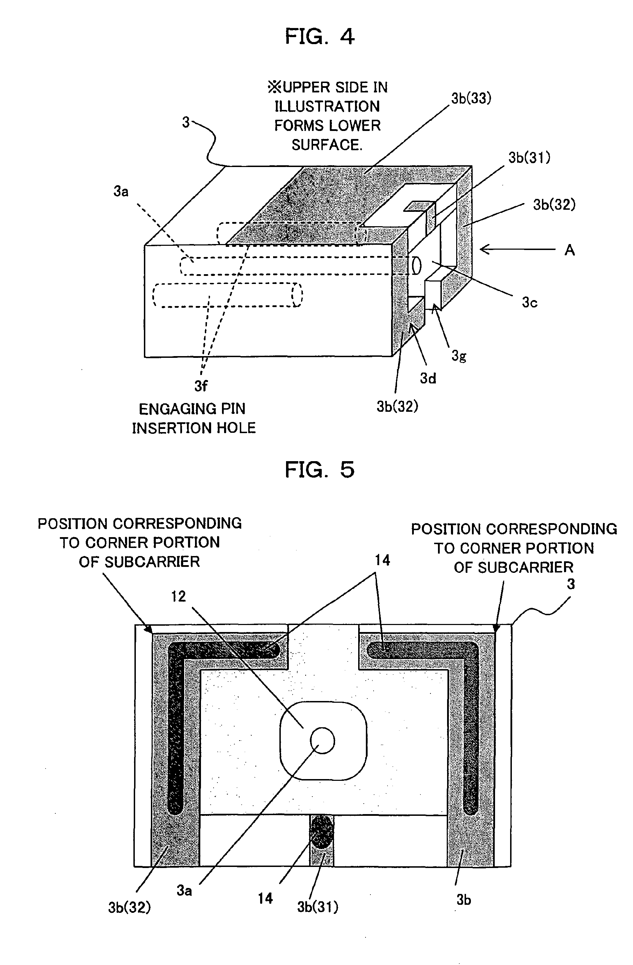

FIG. 1 is a partially-transparent side-elevational view illustratively showing a construction of an optical module according to a first embodiment of the present invention, FIGs. 2(A) and 2(B) are perspective views illustratively showing an optical element serving as a principal component of this optical module, FIG. 3 is a perspective view illustratively showing a subcarrier (optical element mounted substrate) on which this optical element is loaded (mounted), and FIG. 4 is a perspective view illustratively showing a ferrule serving as a principal component of this optical module.

In FIG. 1, an optical module includes, as principal components, a subcarrier 8 on which an optical element 1 is mounted, for example, a light-emitting element such as LD or a light-receiving element such as PD, is mounted which is for carrying out the photoelectric conversion, and a ferrule (protective component) 3 made to protect an optical fiber 3a which acts as an optical transmission medium. Incidentally, in FIG. 1, reference numeral 7 designates a Pt board [printed substrate (external electric circuit)] in which packaged are a driver circuit for driving the optical element 1, and others.

In this construction, for example, as shown in FIG. 2(A), the optical element 1 has, on one surface (face) of a substrate 1b, a light-transmission window portion 1a functioning as a light-emitting portion in the case of an LD and as a light-receiving portion in the case of a PD and an electrode pattern (face electrode) 1c functioning as a signal (LD drive signal or PD light reception current) side electrode, and as shown in FIG. 2(B), it has, on the other surface (back), an electrode pattern (back electrode) 1d functioning as a power supply or ground (GND) side electrode (power supply/GND side electrode). This structure is a configuration common among the surface optical elements (VCSEL or PIN-PD) put on the market.

Meanwhile, in the ferrule 3, as shown in FIGs. 1 and 4, a through hole is made which is for accommodating the optical fiber 3a, and an indentation or cavity-like portion (optical element accommodating indentation) 3c, which is capable of accommodating the optical element 1 , loaded on the subcarrier 8, in whole or in part, is made in one side wall surface (end surface) in the extending direction of the through hole (optical fiber 3a) and, in consequence, a wall portion 3d is formed around this indentation 3c.

The wall portion 3d is partially cut on the upper surface side (lower side in FIG. 4) of the body of the ferrule 3 and this cut (gap) portion, designated at reference numeral 3g, is used as a filling window which is for filling the indentation 3c with a transparent resin 12 as mentioned later. The other end of the optical fiber 3a is exposed at a side wall surface opposite to the sidewall surface in which the aforesaid optical element accommodating indentation 3c is formed.

Moreover, from an upper surface to a side surface (ferrule lower surface: the upper side in FIG. 4 forms a lower surface) of the wall portion 3d located around the indentation 3c, an electric wiring (electrode pattern) 3b (see electric wirings 31, 32 and 33 indicated by hatching in the illustrations) related to the optical element 1 (at least used for the transmission of a drive signal for the optical element 1) is formed on a surface of the ferrule 3. In this case, the electric wiring 31 isolatively formed on the upper surface of the wall portion 3d functions as a signal side electrode (wiring) electrically connected to the signal electrode 1c of the optical element 1, while the other electric wiring 32 formed on the upper surface of the same wall portion 3d and the electric wiring 33 formed on the lower surface of the ferrule 3 function as a power supply/GND side electrode (wiring) electrically connected to a power supply/GND electrode 1d of the optical element 1.

Thus, as shown in FIG. 1, when the ferrule 3 is placed on the Pt board 7 in a state where the ferrule lower surface down, the electric wirings 31 and 33 formed on the ferrule lower surface side and an electric wiring(s) for the driver circuit and others formed on the Pt board 7 is easily connectable through a solder layer (solder bump) 10 or the like. That is, in this embodiment, the ferrule 3 is made such that at least a portion (31, 33) of the electric wiring 3b is formed on its side surface (flat portion) the electric wirings 31 and 32 formed in this portion and the electric wiring formed on the Pt board 7 are electrically connected to each other.

In this connection, the flat portion of the ferrule side surface on which the portion of the electric wiring 3b is to be formed can also exist only on a part of that side surface, not on the whole thereof, in accordance with the wiring pattern or the like on the Pt board 7 side. Moreover, for the body (body of equipment) of the ferrule 3 to be used in this embodiment, for example, ceramics is used as its material, and the electric wiring 3b is formed through the use of Au deposition or the like. The end surface opposite to the end surface mounted the electric wiring 3b is optically polished and is connected to an external optical fiber through an engaging pin. Accordingly, holes (engaging pin insertion holes) 3f for the insertion of the engaging pin are made in the interior of the ferrule 3. A manufacturing process for the ferrule 3 with this electric wiring 3b will be described later.

As FIG. 3 shows, for example, in the subcarrier 8, an Au (gold) pattern (electric wiring) 8a (81, 82, 83) is formed on a ceramic substrate 8b and, at a portion on which the optical element 1 is to be loaded, there is formed a solder layer (solder bump) 8c made of, for example, AuSn . This solder layer 8c is connected to the aforesaid back electrode 1d of the optical element 1. The solder layer 8c is connected through the Au pattern 81 to connection portion (junction) 8g with the ferrule 3 side wiring 3b (power supply/GND side electrode 32) . Incidentally, the reason that the ceramic substrate is employed as the substrate 8b is for the heat resistance at the subsequent heating and melting of the solder bump 8c. In other words, a substrate made of a different material is also employable provided that it shows an acceptable heat resistance at the heating and melting of the solder bump 8c.

In addition, a wire pad 8d to be connected through, for example, a bonding wire (Au wire) 11 (see FIG. 1) to the face electrode 1c of the optical element 1 is also formed on the subcarrier 8, and the wire pad 8d is connected through the electric wiring 82 to the Au pattern 83 acting as an electrode pad positioned at the connection portion (junction) with the ferrule 3 side wiring 3b (signal side electrode 31) . In FIG. 3, reference numeral 8e denotes a maker indicative of the loading (mounting) position of the optical element 1.

As shown in FIG. 1, the subcarrier 8, on which the optical element 1 is mounted through the solder layer 8c, is aligned so that the optical axes of the optical element 1 and the optical fiber 3a coincide with each other and, in a state where the ferrule 3 side wiring 3b (31 and 32) and the subcarrier 8 side wiring 8a (83 and 81) are brought into contact with each other in the direction that the optical element 1 is accommodated in the aforesaid indentation 3c made in the ferrule 3, the subcarrier 8 is attached and fixed to the ferrule 3, thereby integrating the optical element 1 and the ferrule 3 with the electric wiring 3b. Thus, the optical element 1 is integrated with the ferrule 3 in a state accommodated in the indentation 3c, which can achieve the size reduction entirely while protecting the optical element 1.

In this case, for example, a conductive adhesive 14 and an ultraviolet cure type resin 12 are used for the connection and fixing between the ferrule 3 and the subcarrier 8. From the viewpoint of suppressing the short-circuit between the wirings and securing an optical path between the optical element 1 and the optical fiber 3a, it is preferable that the viscosity of the ultraviolet cure type region 12 and the conductive adhesive 14 before cured is approximately 20000 CP (centipoise) which can suppress the flowability to some extent. In this embodiment, since the ultraviolet cure type resin 12 is put in the optical path, it is required to be transparent (the optical transmittance is 100% or about 100%) with respect to an optical signal to be transmitted between the optical element 1 and the optical fiber 3a. It is desirable that the ultraviolet cure type resin 12 has a refractive index (approximately 1.5) equal to or approximately equal to that of the optical fiber 3a. Moreover, preferably, the deaeration is performed in order to prevent the light scattering.

With respect to the optical-element-incorporated electric-wiring-mounted ferrule 3 thus constructed, as shown in FIG. 1, the ferrule 3 side wiring 3b (31, 33) and the Pt board (external electric circuit) 7, on which mounted are the driver circuit for driving the optical element 1 and others, are electrically connected to each other through the solder layer 10 or the like, thereby providing an optical-element and ferrule incorporated optical module.

A more detailed description will be given hereinbelow of a method of assembling an optical module according to this embodiment.

When the optical element 1 is aligned and fixed with respect to the ferrule 3 with the electric wiring 3b, a problem on the alignment method arises. That is, in this embodiment, since the wiring for the feeding to the optical element 1 lies on the ferrule 3 side, not on the optical element 1 side, for carrying out the active alignment which is for adjusting the optical axis while driving the optical element 1, a means for feeding electricity to the optical element 1 become necessary, and for conducting the passive alignment in which the optical element 1 is not driven at the optical axis adjustment (control), a marker formation on the optical element 1, or the like, becomes necessary.

In this embodiment, a method of feeding electricity to the optical element 1 is taken to carry out the optical axis adjustment on the basis of the active alignment. The reason for the employment of the active alignment is because the alignment of the surface type optical element 1 with respect to the ferrule 3 requires the two-dimensional relative position adjustment for whether the active alignment or the passive alignment and it is considered that the active alignment capable of directly monitoring and inspecting the optical coupling efficiency during the optical axis adjustment requires less production cost. Naturally, the employment of the passive alignment is also acceptable.

The methods of feeding electricity to the optical element 1 according to the active alignment during the optical axis adjustment are roughly classified into (a) a method in which the conductive adhesive 14 is used for the connection between the optical element 1 (subcarrier 8 side wiring 8a) and the ferrule 3 side wiring 3b and (b) a method in which the conduction is made by bring the optical element 1 (subcarrier 8 side wiring 8a) and the ferrule 3 side wiring 3b into contact with each other.

As this embodiment, a description will be given hereinbelow of the former method (a) in which the conductive adhesive 14 is used for the connection between the optical element 1 (subcarrier 8 side wiring 8a) and the ferrule 3 side wiring 3b.

The requirements for the active alignment are that (i) the relative position between the optical element 1 and the ferrule 3 is fine-adjustable, (ii) the conduction from the ferrule 3 side wiring 3b to the optical element 1 (subcarrier 8 sidewiring 8a) is feasible, and (iii) the element temperature for the operation of the optical element 1 is in the vicinity of the room temperature. This requires only that a conductive material for the electrical connection between both the wirings 3b and 8a can be deformed at the room temperature during the optical axis adjustment and can be cured after the optical axis adjustment. Therefore, the conductive adhesive 14 (for example, a silver paste) is employed as the conductive material for the electrical connection therebetween.

The conductive adhesive 14 is in a semi-solid condition showing flowability before cured and comes into a cured condition when heated. The type of the conductive adhesive 14 is selected so that the curing temperature does not exceed the heat-resistance temperature of the ferrule 3 . The optical axis adjustment/fixture using the conductive adhesive 14 is made such that the optical axis adjustment is first made in a state the optical element 1 (subcarrier 8 side wiring 8a) and the ferrule 3 side wiring 3b are electrically connected to each other through the non-cured conductive adhesive 14 and the conductive adhesive 14 is then cured after the optical axis reaches completion. Usually, the conductive adhesive 14 (silver paste) is a thermosetting adhesive and, in most cases, it is cured in a thermostat. Incidentally, as the conductive adhesive 14 , a solder is also employable provided that its temperature does not exceed the heat-resistance temperature of the ferrule 3.

During the movement from the optical axis adjustment system to the thermostat, there is a possibility that the optical axis adjusted at the curing in the thermostat shifts. For avoiding this, there is a need to fix the optical element 1 (subcarrier 8) and the ferrule 3 before the shifting of the optical axis occurs and, hence, it is preferable that, immediately after the optical axis adjustment, the temporary fixing is conducted through the use of an ultraviolet cure type resin 12 which takes a short time for the curing.

As the ultraviolet cure type resin 12 for the temporary fixing, there is used a material transparent (optical transmittance is 100% or approximately 100%) with respect to an optical signal. It is put between the optical fiber 3a placed in the interior of the ferrule 3 and the optical element 1 for the hermetic sealing. This provides the following effects and advantages.

In the first place, since the temporary fixing is directly made on the optical axis shifting preventing portion, it is possible to improve the stability of the optical coupling until the conductive adhesive 14 comes into a hardened condition.

In the second place, a transparent adhesive matching the refractive index of the optical fiber 3a is selected so that, in a case in which the optical element 1 is an LD, the reflection on an end surface of the optical fiber 3a, which causes the occurrence of noise, is suppressible.

In the third place, when the optical element 1 is coated with a sealing resin after the conductive adhesive 14 is cured, it is usually possible to prevent the opaque sealing resin from getting between the optical element 1 and the optical fiber 3a to interfere with the optical coupling therebetween. Incidentally, the ultraviolet cure type resin 12 put between the optical element 1 and the optical fiber 3a is surely cured by applying ultraviolet rays thereto through the optical fiber 3a.

Referring to FIGs . 5 to 9, a description will be given hereinbelow of an actual assembling example.

### (1) Loading of Optical Element 1 on Subcarrier 8

First, for example, the subcarrier 8 is sucked (adsorbed) to be attached onto a heater (not shown) and the optical element 1 is put on the subcarrier 8 according to an optical element loading position marker 8e so that the back electrode 1d comes into contact with the solder bump 8c on the carrier 8. In this state, the heater is energized (for example, in the case of AuSn, it is heated at 310 °C for approximately 10 seconds) so as to melt the solder bump 8c and is then cooled up to the room temperature. Thus, the back electrode 1d of the optical element 1 is fixed through the solder layer 3c to the subcarrier 8. Moreover, the upper surface electrode 1c of the optical element 1 and the subcarrier 8 side wire pad 8d are connected to each other through, for example, the bonding wire 11.

### (2) Application of Adhesive onto Ferrule 3

A dispenser is used for the application of an adhesive (ultraviolet cure type resin 12 and conductive adhesive 14) onto the ferrule 3. For example, as shown in FIG. 5 (corresponding to the illustration of a portion of the ferrule 3 indicated by an arrow A in FIG. 4), the ultraviolet cure type resin 12 is applied onto a portion where an end portion of the optical fiber 3a appears and the conductive adhesive 14 is applied onto a connection portion between the ferrule 3 side wiring 3b (31, 32) and the subcarrier 8 side wiring 8a (83, 81) on an upper surface of the wall portion 3d of the ferrule 3. Naturally, these adhesives can be applied onto the mating portion on the subcarrier 8 side.

### (3) Optical Axis Adjustment

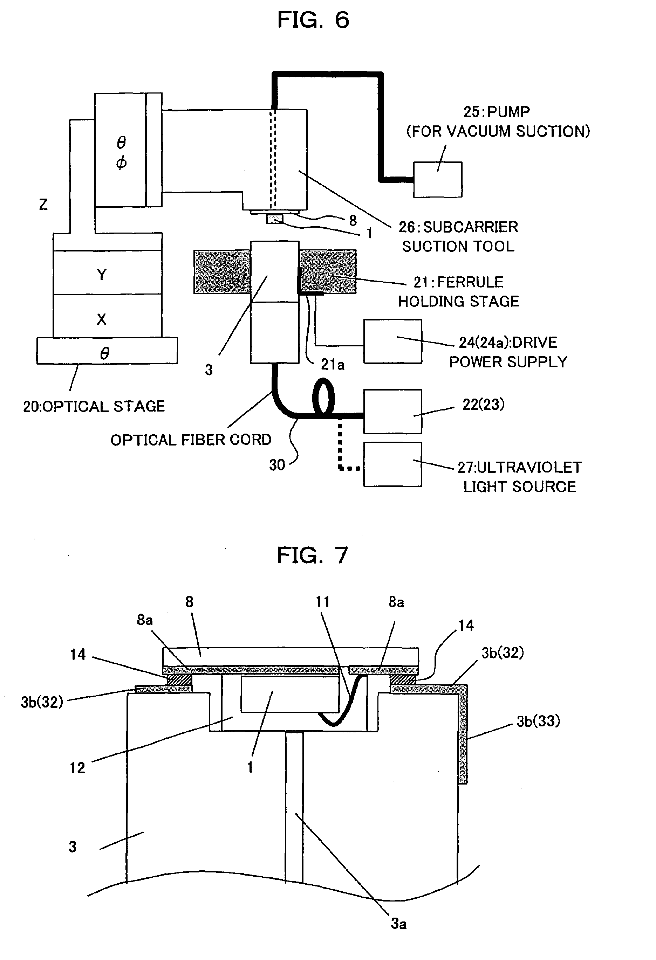

Following this, as shown in FIG. 6, an optical fiber cord 30 to be connected to the optical fiber 3a is connected to a ferrule end surface side opposite to the side where the adhesives 12 and 14 are applied as mentioned above and is set on a predetermined optical stage 20 (ferrule mounted stage 21) of the optical axis adjustment system. The other end portion of the optical fiber cord 30 connected to an optical power meter 22 in a case in which the optical element 1 is a light-emitting element such as an LD while being connected to a light source 23 (emitting a sensitive wavelength) when the optical element 1 is a light-receiving element such as a PD.

The stage 21, on which the ferrule 3 is set, is equipped with an terminal (electrode pattern) 21a brought into contact with the ferrule side wiring 3b, and this is connected to a drive power supply 24 for the optical element 1. In a case in which the optical element 1 is a light-receiving element, the drive power supply 24 is connected to the ferrule 3 side wiring 31 electrically connected to the signal side electrode 1c of the optical element 1 and also functions as a current monitor 24a to detect a light reception current signal.

The subcarrier 8, carrying the optical element 1, is sucked to be fixed to a predetermined tool (subcarrier suction tool) 26 through the use of, for example, a pump 25 for the vacuum suction so that the optical element 1 confronts the ferrule 3 end surface on which the adhesives 12 and 14 are applied. The optical stage 20 has a mechanism capable of three-dimensionally moving a subcarrier suction tool 26 which sucks the subcarrier 8.

In this state, the subcarrier 8 (rear surface) and the ferrule 3 is observed obliquely from the above to align the external shape of the subcarrier 8 with a predetermined position of the ferrule 3 end surface. Thus, the rough alignment in the surface directions of the optical element 1 and the optical fiber 3a reaches completion. Subsequently, the subcarrier 8 is brought closer to the ferrule 3 while the optical element 1 and the ferrule 3 end surface are observed sideways, and the ultraviolet cure type resin 12 is brought into contact with the optical element 1 and the conductive adhesive 14 is brought into contact with the subcarrier side wiring 8a (see FIG. 7).

Following this, the feeding from the drive power supply 24 to the optical element 1 starts and the optical stage 20 is controlled so that the coupling efficiency of the optical element 1 and the optical fiber 3a becomes at a maximum, thus performing the fine adjustment on the position of the subcarrier 8. That is, in a case in which the optical element 1 is a light-emitting element such as an LD, the optical power meter 22 detects the magnitude of the optical power outputted through the optical fiber 3a, and when it is a light-receiving element such as a PD, the current monitor 24a detects the magnitude of the light-reception electric signal corresponding to the light inputted from the light source 23 through the optical fiber 3a, thereby carrying out the fine adjustment on the position of the subcarrier 8 so that the detection value reaches a maximum.

### (4) Temporary Fixing of Subcarrier 8 and Ferrule 3

Subsequently, the optical fiber cord 30, which has been connected to the optical axis adjustment light source 23 or the optical power meter 22, is connected to an ultraviolet light source 27, which enables applying ultraviolet light through the optical fiber 3a to the ultraviolet cure type resin 12 for curing it. This ultraviolet application can also be made, for example, sideways without passing through the optical fiber 3a. Moreover, for enhancing the temporary fixing strength, the ultraviolet cure type resin 12 can also be applied between a peripheral portion of the subcarrier 8 and the ferrule 3 end surface and then cured.

### (5) Curing of Conductive Adhesive 14

The subcarrier 8 and the ferrule 3 temporarily fixed are removed from the optical axis adjustment system and the optical fiber cord 30 connected to the ferrule 3 is disconnected therefrom, before the conductive adhesive 14 is heated and cured in a thermostat.

### (6) Resin Sealing

Lastly, for example, the resin sealing is made through the use of a COB (Chip On Board) mounting chip coat region (sealing resin) 9 (see FIGs . 8 and 9). At this time, the resin is selected so that its curing temperature does not exceed the heat-resistance temperatures of the ferrule 3 and other resin materials. Moreover, it is preferable that the viscosity before curing is low for reliably putting the resin 9 even in a narrow gap.

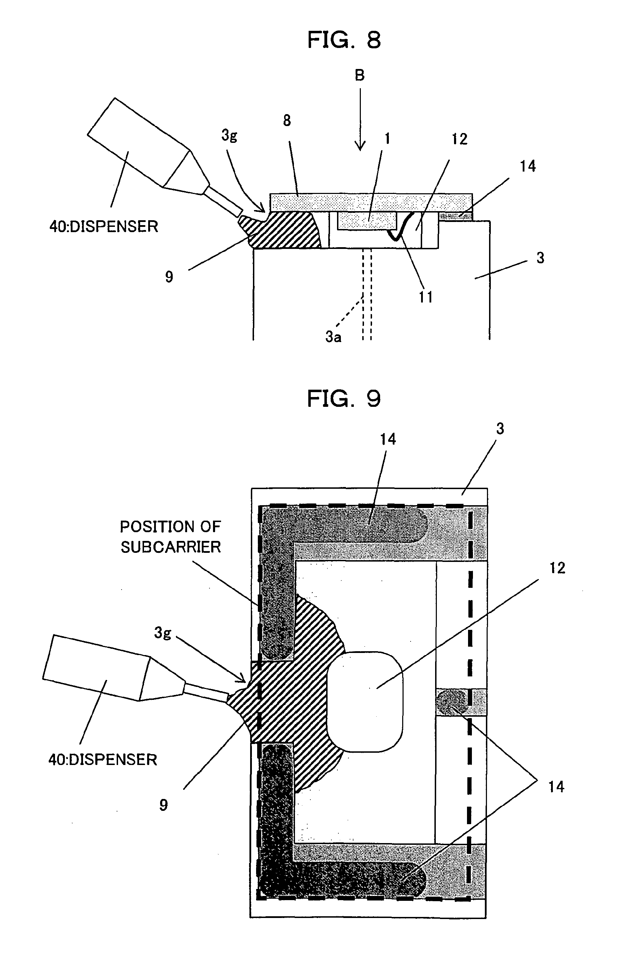

Concretely, for example, as illustratively shown in FIGs . 8 and 9, a dispenser 40 is used for applying the sealing resin 9 and the sealing resin 9 is inpoured through the aforesaid cut portion 3g (see FIG. 4) of the ferrule 3 into a gap between the subcarrier 8 and the ferrule 3. FIG. 9 is a plan view showing a portion indicated by an arrow B in FIG. 8, and in FIG. 9, the subcarrier 8 is shown transparently (by a dotted line).

In this case, since the thickness of the optical element 1 is approximately 200 µm, the depth of the ferrule indentation 3c is below 1 mm, and the outflow of the sealing resin 9 is preventable at corner portions of the ferrule 3 owing to the effects of surface tension. After a needed amount of sealing resin 9 is applied thereto, the assembly is put in a thermostat in a state where the subcarrier 8 side up for heating and curing.

As described above, according to this embodiment, since the electric wiring 3b for the connection between the optical element 1 and the external electric circuit 7 is formed on the ferrule 3, the principal components constituting the optical module are only two in number (the optical element 1 and the ferrule 3 or the optical element 1 mounted subcarrier 8), and the number thereof is reducible as compared with the first conventional example mentioned above with reference to FIG. 22 and the second conventional example mentioned above with reference to FIG. 3, thus realizing the considerable size reduction of the optical module. Therefore, this contributes greatly to the size reduction and the cost reduction needed for an optical transmission module or an optical reception module for the data transfer in the next-generation server system or the like. In particular, in this embodiment, the integration is made in a state where the optical element is accommodated in the indentation 3c made in the end surface of the ferrule 3, which enables achieving further size reduction while protecting the optical element 1.

Moreover, since the subcarrier 8 mounted the optical element 1 is mounted and fixed with respect to the end surface of the ferrule 3, a stable optical coupling structure is easily realizable. In particular, with the example described above, since the optical element 1 is loaded on the subcarrier 8 and the subcarrier 8 side wiring 8a and the ferrule 3 side wiring 3b are connected to each other, when the optical element 1 forms a light-emitting element such as an LD, the heat generated from the optical element 1 can be handed over to the subcarrier 8, which improves the heat radiation effects.

Still moreover, because of a simple structure in which the optical element 1 and the optical fiber 3a can directly be optically coupled to each other without using a lens, it is possible to minimize the members for the optical coupling. Yet moreover, since the connection portion (solder layer 10) between the ferrule electric wiring 3b and the external electric circuit 7 receives the optical connector insertion/pull-out stress applied to the ferrule 3, the insertion/pull-out stress is not applied between the optical element 1 and the ferrule 3 and, hence, the variation of the optical coupling efficiency stemming from an increase in relative position shifting hardly occurs.

In addition, the construction in which the subcarrier 8 carrying the optical element 1 is mounted on the end surface of the ferrule 3 as mentioned above is suitable for the mounting of the surface light-receiving/emitting type optical element 1. That is, although there is a need to place the inter-wiring connection portion on the generally same plane for the electrical connection between the optical element 1 (subcarrier 8 side wiring 8a) and the ferrule 3 side wiring 3b, in the case of the surface light-receiving/emitting type optical element 1, the optical element 1 side substrate 1b (electrodes 1c , 1d) is in parallel relationship with respect to the end surface for the ferrule side wiring 3b in which the indentation 3c is made and, hence, these wirings can be positioned on the generally same plane at the mounting. In particular, in the case of the employment of the subcarrier 8, the wiring pattern 8a can be formed only on one surface of the subcarrier 8, which enables easy manufacturing.

In this connection, in the case of an end surface light-receiving/emitting type optical element such as an FP-LD or a waveguide type PD, since an electrode of the optical element is in perpendicular relationship with respect to the end surface for the ferrule side electric wiring 3b in which the indentation 3c is made, there is a need to employ a subcarrier having an electric wiring, 90-degree-bent, on its two surfaces adjacent to each other.

### [B] Description of Second Embodiment

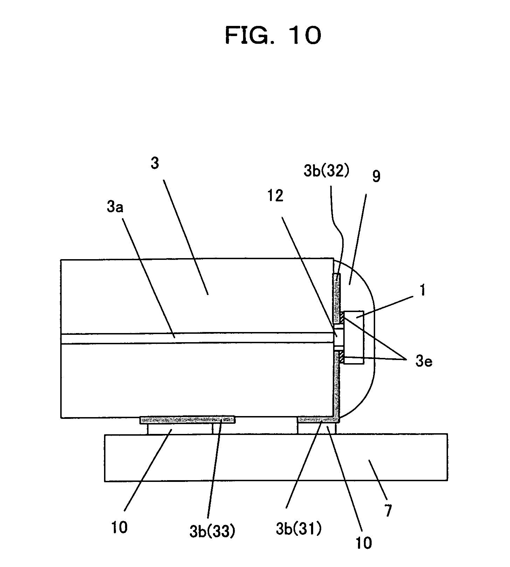

FIG. 10 is a side elevational cross-sectional view illustratively showing a construction of an optical module according to a second embodiment of the present invention. In FIG. 10, the optical module has a construction in which an optical element 1 is directly attached to a ferrule 3 with an electric wiring 3b without using the aforesaid subcarrier 8. In the following description, the same reference numerals as those used above designate the same or similar parts as those mentioned above, unless otherwise specified particularly.

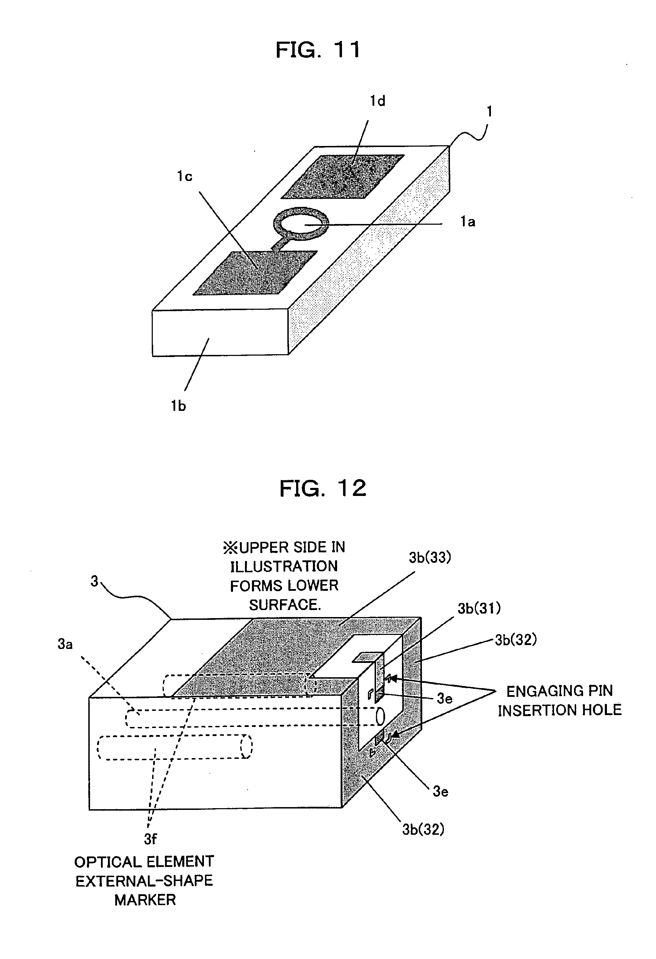

In this construction, for example, as illustratively shown in FIG. 11, in the optical element 1, for mounting a flip chip on the ferrule 3, each of a signal side electrode 1c and a power supply/GND side electrode 1d is provided on one surface portion of a substrate 1b [which is the same as the surface for a window portion (light-emitting portion or light-receiving portion) 1a].

On the other hand, also in this embodiment, the ferrule 3 is made of a ceramic material and, as illustratively shown in FIG. 12, has a through hole for accommodating an optical fiber 3a and engaging pin insertion holes 3f similar to those in the first embodiment. Moreover, in this embodiment, two end surfaces where both the ends of the optical fiber 3a appear are flat (the optical element accommodating indentation 3c in the first embodiment is not made), and from one ends surface to a bottom surface (the upper side of FIG. 12 is the bottom surface) of the ferrule 3, an electric wiring 3b (31, 32, 33) is formed to the positions of a window portion 1a and electrodes 1c, 1d of the optical element 1.

Also in this case, the electric wiring 31 isolated from the other wirings 32 and 33 functions as a signal side electrode (wiring) electrically connected to the signal side electrode 1c of the optical element 1, while each of the other electric wirings 32 and 33 functions as a power supply/GND side electrode (wiring) to be electrically connected to the power supply/GND side electrode 1d of the optical element 1. That is, also in this embodiment, in the ferrule 3, at least a portion (31, 33) of the electric wiring 3b is formed on its side surface (flat portion), and the electric wirings 31, 32 formed on this portion and the electric wiring formed on a Pt board 7 are electrically connected to each other. Moreover, a solder bump (solder layer) 3e made of, for example, AuSn is formed at a portion of the electric wire 3b to which the optical element 1 is connected.

In addition, the ferrule 3 side wiring 3b (31, 32) and the optical element 1 side electrodes 1c, 1d are electrically connected and fixedly secured to each other through the solder bump 3e so that the optical element 1 and the ferrule 3 are integrated with each other. Incidentally, it is also acceptable that the connection and fixing are made through the use of the conductive adhesive 14 instead of the solder bump 3e. However, the employment of the solder connection is more preferable because of its record of performance and its reliability in stability of optical coupling. Moreover, also in FIG. 10, reference numeral 9 designates a sealing resin for hermetically sealing the optical element 1, and numeral 12 depicts a transparent resin (ultraviolet cure type resin) put in a gap between the optical element 1 and the ferrule 3 for suppressing the reflection at the optical fiber 3a end surface and securing the optical path between the optical element 1 and the optical fiber 3a and transparent with respect to an optical signal.

Lastly, as shown in FIG. 10, the optical-element-integrated and electric-wiring-mounted ferrule 3 thus constructed is electrically connected and fixed through a solder 10 or the like to a Pt board (external electric circuit) 7 on which mounted are a driver circuit for driving the electric-wired optical element 1, and others, thereby producing an optical element and ferrule integrated optical module.

As described above, in the construction according to this embodiment, since the optical element 1 is directly attached to the ferrule 3 with the electric wiring 3b without using the subcarrier 8, the number of principal components constituting the optical module is further reducible and the further size reduction of the optical module is realizable.

A description will be given hereinbelow of an example of assembling the optical module.

In this case, as the method of feeding to the optical element 1 at the optical axis adjustment according to the active alignment, there is employed the method (b) in which the condition is made by bringing the optical element 1 side electrodes 1c, 1d and the ferrule 3 side wiring 3b into contact with each other, mentioned above in the first embodiment.

In this method, of the three active alignment requirements [(i) the fine adjustment of the relative position between the optical element 1 and the ferrule 3, (ii) the conduction between the optical element 1 side electrodes 1c, 1d and the ferrule 3 side wiring 3b and (iii) room temperature] mentioned above in the first embodiment, the relative position fine adjustment step and the electrode 1c, 1d-wiring 3b conduction step are conducted separately.

Concretely, the following steps (a) to (c) are repeatedly conducted to adjust the relative position until the coupling efficiency between the optical element 1 and the optical fiber 3a reaches a maximum.
(a) In a state where the optical element 1 is placed into a drive-stopped condition, the optical element 1 is separated from the ferrule 3 to change the relative position between the optical element 1 and the optical fiber 3a.
(b) The electrodes 1c, 1d of the optical element 1 and the electric wiring 3b (solder bump 3e) of the ferrule 3 are brought into contact with each other to start the driving of the optical element 1.
(c) The detection is made on the magnitude of optical power outputted from the optical element 1 through the optical fiber 3a, or the detection is made on the magnitude of a light-reception electric signal corresponding to the light inputted through the optical fiber 3a to the optical element 1.

Referring to FIGs . 13 to 16, a description will be given hereinbelow of an actual assembling procedure.

### (1) Optical Axis Adjustment of Optical Element 1 and Optical Fiber 3a

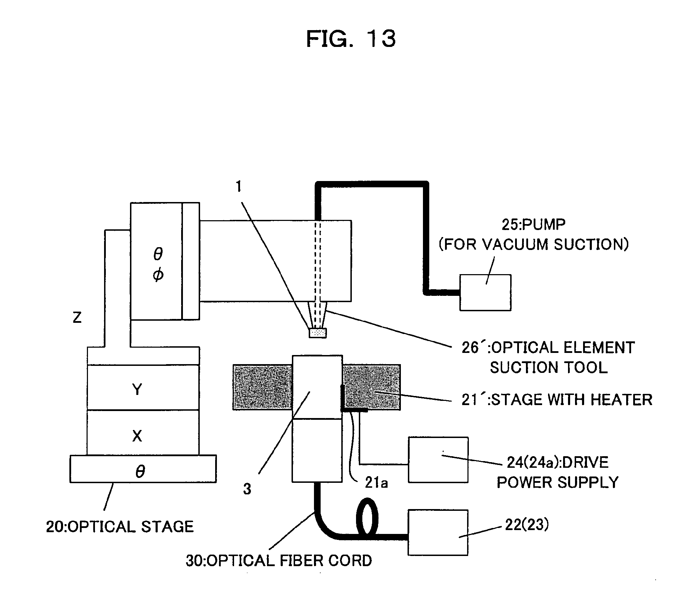

As illustratively shown in FIG. 13, of the two ferrule end surfaces where the optical fiber 3a appears, to the end surface where the electric wiring 3b is not formed, there is connected an optical fiber cord 30 to be connected to the optical fiber 3a. Subsequently, the ferrule 3 is set on a stage 21' with a predetermined heater in the optical axis adjustment system. The other end portion of the optical fiber cord 30 connected thereto is connected to the optical power meter 22 in a case in which the optical element 1 is a light-emitting element such as an LD, while it is connected to the light source 23 (emitting a sensitive wavelength) when the optical element 1 is a light-receiving element such as a PD.

Also in this case, the stage 21' on which the ferrule 3 is to be set is equipped with a terminal 21a which comes into contact with the ferrule side wiring 3b, and it is connected to the drive power supply 24 for the optical element 1. Also in this embodiment, the drive power supply 24 also functions as a current monitor 24a to monitor the light-reception current at the optical element 1 (ferrule side wiring 31) when the optical element 1 is a light-receiving element such as a PD.

The optical element 1 is sucked and fixedly secured to a predetermined tool (optical element suction tool) 26' through the use of, for example, a pump 25 for the vacuum suction so that its light-reception/emission surface confronts the ferrule 3.

In this state, the external shape of the optical element 1 is placed to align with a predetermined position of the ferrule 3 to carry out the rough alignment between the optical element 1 and the optical fiber 3a. Following this, the optical element 1 is brought closer to the ferrule 3 so that the electrodes 1c and 1d of the optical element 1 are brought into contact with the solder bumps 3e formed on the ferrule side wiring 3b.

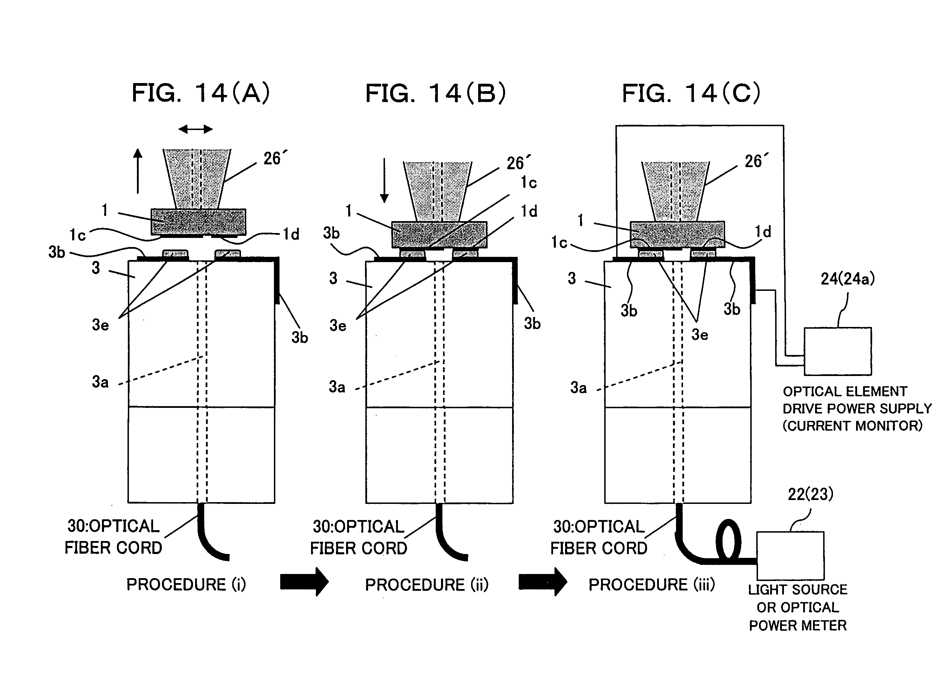

The feeding to the optical element 1 is then started, and when the optical element 1 is a light-emitting element such as an LD, the magnitude of the optical power outputted through the optical fiber 3a is detected through the use of the optical power meter 22 while, when the optical element 1 is a light-receiving element such as a PD, the magnitude of the light-reception electric signal corresponding to the light inputted from the light source 23 through the optical fiber 3a is detected through the use of the current monitor 24. Thereafter, as illustratively shown in FIG. 14, the following procedures (steps) (i) to (iii) are repeatedly conducted to carry out the fine adjustment on the position of the optical element 1 so that the coupling efficiency between the optical element 1 and the optical fiber 3a reaches a maximum.
(i) In a state where the optical element 1 is placed into a drive-stopped condition, the optical element 1 is separated from the ferrule 3 to change the relative position between the optical element 1 and the optical fiber 3a [moving step : see FIG. 14(A)].
(ii) The electrodes 1c, 1d of the optical element 1 and the solder bump 3e of the ferrule 3 are brought into contact with each other to start the driving of the optical element 1 through the use of the drive power supply 24 [optical element driving step : see FIG. 14(B)].
(iii) The detection is made on the magnitude of optical power outputted from the optical element 1 (light-emitting element) through the optical fiber 3a through the use of the optical power meter 22, or the detection is made on the magnitude of a light-reception current in the optical element 1 (light-receiving element) with respect to the light inputted from the light source 22 through the optical fiber 3a through the use of the current monitor 24a [detecting step : see FIG. 14(C)].

### (2) Fixing of Optical Element 1

After the optical axis adjustment on the optical element 1 reaches completion according to the method mentioned above, the stage 21' with a heater is heated to once melt the solder bump 3e which, in turn, is cooled to the vicinity of the room temperature so that the optical element 1 is fixedly secured to the ferrule 3.

### (3) Putting Transparent Resin 12 Between Optical Element 1 and Optical Fiber 3a

Following this, the transparent resin 12 is put between the optical element 1 and the optical fiber 3a. As in the case of the first embodiment, this is for improving the stability of the optical coupling, for suppressing the reflection on an end surface of the optical fiber 3a and for preventing the interference with the optical path by the sealing resin.

Also in this embodiment, since the transparent resin 12 is placed at the position of the coupled optical path between the optical element 1 and the optical fiber 3a, it is required to be transparent (the optical transmittance is 100% or about 100%) with respect to an optical signal. It is desirable that the transparent resin 12 has a refractive index (approximately 1. 5) equal to or approximately equal to that of the optical fiber 3a. Moreover, preferably, the deaeration is performed in order to prevent the light scattering by bubbles. Still moreover, since the transparent resin 12 is put in a narrow gap between the optical element 1 and the ferrule 3, it is preferable that the viscosity thereof before cured is as lower as possible (for example, approximately 20000 CP). The transparent resin 12 can be an ultraviolet cure type resin or can also be a thermosetting resin such as a silicone resin.

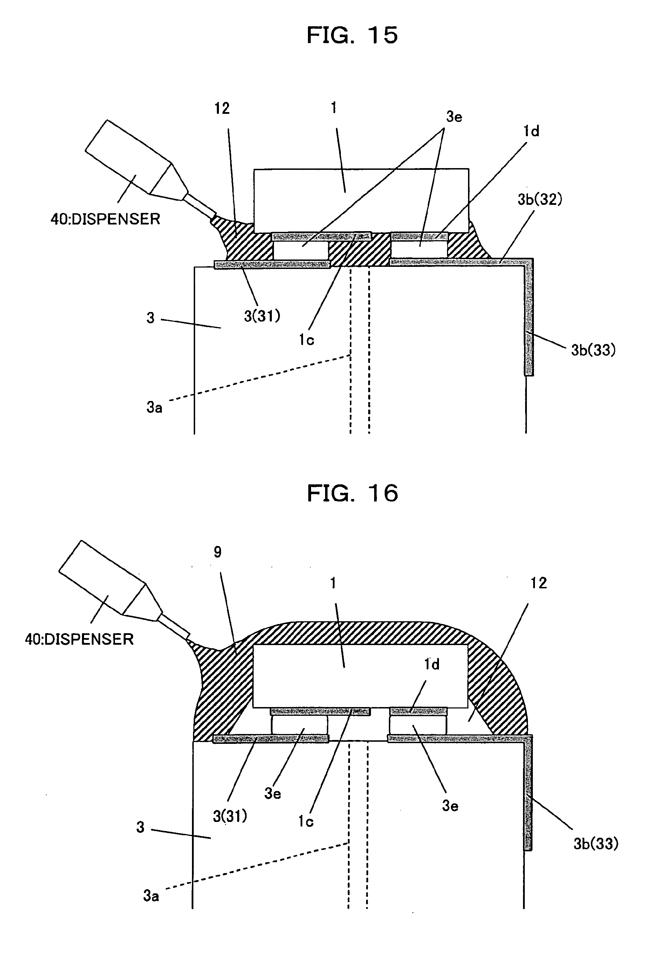

For example, as illustratively shown in FIG. 15, in the actual procedure, the transparent resin 12 is put in the vicinity of the optical element 1 fixed to the ferrule 3 end surface through the use of a dispenser 40 to be sucked in the gap between the optical element 1 and the ferrule 3. In the case of the employment of an ultraviolet cure type resin, the ultraviolet light is applied through the optical fiber 3a thereto for curing.

### (4) Resin Sealing

Lastly, for example, as illustratively shown in FIG. 16, a COB (Chip On Board) mounting chip coat resin is used as the sealing resin 9 for the hermetic sealing of the optical element 1 . The sealing resin 9 is selected so that its curing temperature does not exceed the heat-resistance temperature of the ferrule 3 or other resin materials.

Moreover, a dispenser 40 is also used for the application of the sealing resin 9, and the sealing resin 9 is applied so as to fully cover the optical element 1 and the transparent resin 12. At this time, the outflow of the sealing resin 9 is preventable at corner portions of the ferrule 3 owing to the effects of surface tension. After a needed amount of sealing resin 9 is applied thereto, it is put in a thermostat in a state where the applied side up for heating and curing. [C] Description of Method of Manufacturing Ferrule with Electric Wiring

Secondly, a description will be given hereinbelow of a method of manufacturing the ferrule with an electric wiring mentioned above in the first and second embodiments.

### (C1) Method of Manufacturing Ferrule with Electric Wiring in First Embodiment

The electric wire formed (mounted) ferrule 3 in the first embodiment is produced according to a resin molding technique, which is low in cost and is suitable in the case of using a conductive adhesive 14 which does not require a high heat resistance (approximately 300 °C) . For example, a lead frame is used as the electric wiring 3b.

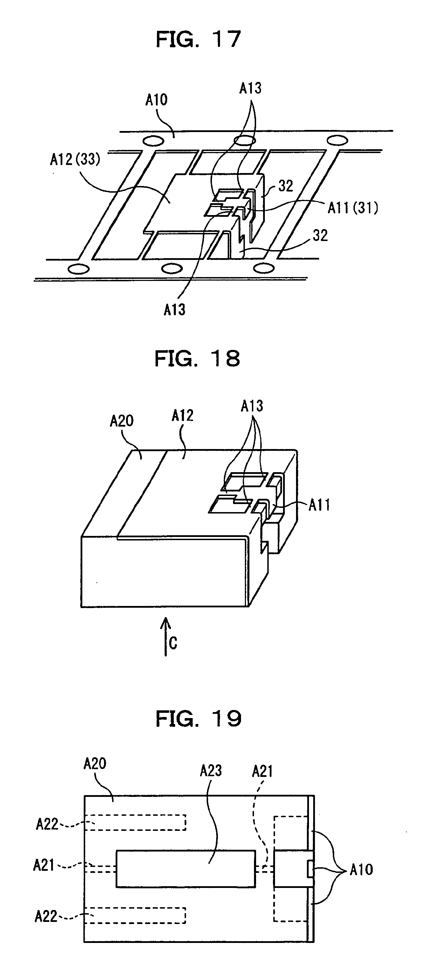

First, as illustratively shown in FIG. 17 , a lead frame A10 is bent to make electrodes forming the aforesaid electric wiring 3b (31, 32, 33) (see FIG. 4). For realizing a small bend radius, as the material of the lead frame A10, a soft copper-based material is suitable, and when a wiring bonding or the like is needed, Au plating can also be conducted. At this time, a signal side wiring A11 (31) is connected through tie bars A13 to a power supply/GND side wiring A12 (33), ands it is cut after the molding processing.

Subsequently, as illustratively shown in FIG. 18, the lead frame A10 is set in a metal mold (not shown) for the formation of a ferrule body (main body) A20, and a cavity of this metal mold is filled with a resin to integrally produce the lead frame A10 and the ferrule body A20. For example, as the resin, there is employed an epoxy-based resin with which a glass filler is mixed.

As illustratively shown in FIG. 19, in both end portions of the formed ferrule body 20, there are made an optical fiber alignment hole A21 (through hole for the optical fiber 3a) and engaging pin insertion holes A22 (corresponding to the engaging pin insertion holes 3f) for accommodating engaging pins. Moreover, an adhesive filling hole A23 is opened so as to cross the optical fiber alignment hole A21. Incidentally, FIG. 19 corresponds to a plan view indicated by an arrow C in FIG. 18.

In this state, the tie bars A13 for making the connection between the signal side wiring A11 and the power supply/GND side wiring A12 are cut by the machining using, for example, an end mill.

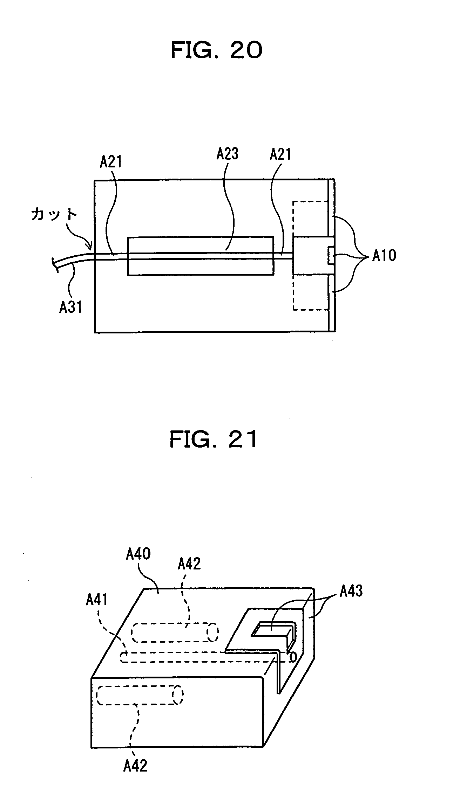

In addition, as illustratively shown in FIG. 20, an optical fiber strand A31 (corresponding to the aforesaid optical fiber 3a) is inserted into the optical fiber alignment hole A21 and an adhesive is put in the adhesive filling hole and cured. In this case, the optical fiber strand A31 is inserted from the end surface where the lead frame A10 does not exist and the optical fiber tip portion is aligned with the end surface where the lead frame A10 exists.

Following this, the extra portion of the optical fiber strand A31 is removed at the end surface where the lead frame A10 does not exist and the end surface thereof is polished. This work reaches completion in this way. Incidentally, since the transparent resin made to match with the refractive index of the optical fiber A31 as mentioned above is applied to (put on) the end surface where the lead frame A10 exists, the polishing is not always necessary.

### (C2) Method of Manufacturing Ferrule with Electric Wire According to Second Embodiment

The ferrule 3 with the electric wire 3b according to the second embodiment is produced using a ceramic as its material because it requires the heat resistance which allows the fixing of an optical element by the solder layer 3e.

For example, as in the case shown in FIG. 20, an optical fiber strand (not shown) is inserted into a block-shaped ceramic-made ferrule body (main body) A40 illustratively shown in FIG. 21 and is fixed using a low-melting-point glass, and the extra portion of the optical fiber strand is cut off. In the ferrule body A40, there are made an optical fiber alignment hole A41 and engaging pin insertion holes A42 (corresponding to the insertion holes 3f in FIG. 12) for accommodating engaging pins and formed a hollow region A43 to which an electric wiring composed of a lead frame is attached (engaged). The depth of the hollow region A43 is set to be equal to the thickness of the lead frame. Preferably, the corresponding corner portions of the ferrule body A40 is rounded to the bend radius of the lead frame.

Then, a lead frame (not shown) similar to that shown in FIG. 17 is adhered through a glass having a lower melting point to the hollow region A43 of the ferrule body A40. A tie bar between the signal side wiring and the power supply/GND side wiring is cut off by the machining using, for example, a diamond cutter or the like.

Thereafter, the end surface where no lead frame exists is polished, and a cream solder is printed at a position on the lead frame corresponding to an electrode (s) of the optical element. This work reach completion in this way.

Incidentally, the method of forming the electric wire 3b on the ferrule 3 is not limited to the above-mentioned examples,

Moreover, it should be understood that the present invention is not limited to the above-described embodiments, and that it is intended to cover all changes and modifications of the embodiments of the invention herein which do not constitute departures from the spirit and scope of the invention.

For example, the configurations (patterns) of the electric wiring 3b to be formed on the ferrule 3 and the electric wiring 8a to be formed on the subcarrier 8 are not limited to the aforesaid patterns in the first and second embodiments, but it is also acceptable to make a change properly to patterns considered to be the best in light of the electrode pattern of the optical element 1 or the electrode pattern of the external electric circuit 7. In addition, the matter to be mounted on the electric wiring attached ferrule 3 is not necessarily limited to the optical element 1.

As described above in detail, according to the present invention, the number of principal components constituting an optical module is further reducible in comparison with the conventional art, and this contributes greatly to the size reduction and cost reduction required for an optical transmission module or an optical reception module for data transfer in the next-generation server system and others, which is considered to be extremely useful in the field of optical communication techniques.

## Claims

1. An optical module **characterized by** comprising:
an optical element (1);
a protective component (3) for protecting an optical transmission medium (3a) to be optically coupled to said optical element (1); and
an electric wiring (3b) formed on said protective component (3) for said optical element (1).

2. The optical module according to claim 1, **characterized in that** said electric wiring (3b) is electrically connected to said optical element (1).

3. The optical module according to claim 1, **characterized in that** said electric wiring (3b) is used for transmitting a drive signal to said optical element (1).

4. The optical module according to claim 1, **characterized in that** a flat portion is formed in a side surface of said protective component (3), and at least a part (33) of said electric wiring (3b) is formed on said flat portion.

5. The optical module according to claim 4, **characterized in that** the electric wiring (33) formed on said flat portion and an electric wiring formed on a printed substrate (7) are electrically connected to each other.

6. The optical module according to claim 1, **characterized by** further comprising an optical element mounted substrate (8) with an electric wiring (8a), on which said optical element (1) is mounted, so that said electric wiring (8a) of said optical element mounted substrate (8) and said electric wiring (3b) of said protective component (3) are connected to each other.

7. The optical module according to claim 1, **characterized in that** said optical element (1) is fixedly secured onto one end surface of said protective component (3) where an end surface of said optical transmission medium (3a) appears.

8. The optical module according to claim 6, **characterized in that** said optical element mounted substrate (8) is fixedly secured onto one end surface of said protective component (3) where an end surface of said optical transmission medium (3a) appears.

9. The optical module according to claim 8, **characterized in that** an indentation (3c) is made in said one end surface of said protective component (3), and said optical element mounted substrate (8) is fixed in a state where at least a portion of said optical element (1) is accommodated in said indentation (3c).

10. The optical module according to claim 1 or 7, **characterized in that** electric wirings (1c, 1d) of said optical element (1) and said electric wiring (3b) of said protective component (3) are connected through a conductive adhesive (14) to each other.

11. The optical module according to claim 6, 8 or 9, **characterized in that** said electric wiring (8a) of said optical element mounted substrate (8) and said protective component (3) are connected through a conductive adhesive (14) to each other.

12. The optical module according to any one of claims 1 to 11, **characterized in that** an ultraviolet cure type resin (12) is put between said optical element (1) and said optical transmission medium (3a) of said protective component (3).

13. The optical module according to claim 12, **characterized in that** said ultraviolet cure type resin (12) is transparent with respect to an optical signal to be transmitted between said optical element (1) and said optical transmission medium. (3a).

14. The optical module according to any one of claims 1 to 13, **characterized in that** said optical element (1) is made as a surface light-emitting type optical element in which a light-emitting element (1a) is set on a substrate (1b) or a surface light-receiving type optical element in which a light-receiving element (1a) is set on a substrate (1b), and said optical element (1) is placed so that one end surface of said protective component (3) and said substrate (1b) thereof are disposed in parallel relation to each other.

15. A method of manufacturing an optical module including an optical element (1), a protective component (3) for protecting an optical transmission medium (3a) to be optically coupled to said optical element (1) and an electric wiring for said optical element (1), **characterized in that**, for optical axis adjustment between said optical element (1) and said optical transmission medium (3a), a relative position between said optical element (1) and said optical transmission medium (3a) is adjusted while placing an electric wiring of said optical element (1) or an optical element mounted substrate mounted said optical element (1) and an electric wiring (3b) formed in said protective component (3) into conduction through the use of a non-cured conductive adhesive (14) for driving said optical element (1), and said conductive adhesive (14) is cured after the adjustment reaches completion.

16. The method of manufacturing an optical module according to claim 15 , **characterized in that**, after the completion of said optical axis adjustment, said optical element (1) or said optical element mounted substrate (8) is temporarily fixed by putting a resin agent (12) transparent with respect to an optical signal between said optical element (1) and said optical transmission medium (3a) and curing said resin agent, and said conductive adhesive (14) is then cured.

17. The method of manufacturing an optical module according to claim 16, **characterized in that** an ultraviolet cure type resin is used as said transparent resin agent (12) and, after said ultraviolet cure type resin is put between said optical element (1) and said optical transmission medium (3a), the temporary fixing is made in a manner such that ultraviolet light is applied to said ultraviolet cure type resin (12) to cure said ultraviolet cure type resin (12).

18. The method of manufacturing an optical module according to claim 17, **characterized in that** said ultraviolet light is applied through said optical transmission medium (3a) to said ultraviolet cure type resin (12).

19. A method of manufacturing an optical module including an optical element (1), a protective component (3) for protecting an optical transmission medium (3a) to be optically coupled to said optical element (1) and an electric wiring for said optical element (1), **characterized in that**, for optical axis adjustment between said optical element (1) and said optical transmission medium (3a), a relative position between said optical element (1) and said optical transmission medium (3a) is adjusted by repeatedly carrying out a moving step of placing said optical element into a driving-stopped condition and changing the relative position between said optical element (1) and said optical transmission medium (3a) in a state where said optical element (1) or an optical element mounted substrate (8) mounted said optical element (1) is separated from said protective component (3), an optical element driving step of driving said optical element (1) by bringing an electric wiring of said optical element (1) or said optical element mounted substrate (8) and an electric wiring (3b) formed in said protective component (3) into contact with each other and a detecting step of detecting a magnitude of optical power outputted from said optical element (1) through said optical transmission medium (3a) or a magnitude of a light-reception electric signal corresponding to light inputted through said optical transmission medium (3a), and said optical element (1) or said optical element mounted substrate (8) and said protective component (3) are fixedly secured to each other after the adjustment reaches completion.

20. The method of manufacturing an optical module according to claim 19, **characterized in that** a solder layer (3e, 8c) is formed at a connection portion on said optical element (1) or an electric wiring of said optical element mounted substrate (8) with an electric wiring (3b) formed on said protective component (3), and after the position adjustment between said optical element (1) and said optical transmission medium (3a) reaches completion, said solder layer (3e, 8c) is heated and melted to fix said optical element (1) or said optical element mounted substrate (8) to said protective component (3).

21. The method of manufacturing an optical module according to claim 19 or 20, **characterized in that** a resin agent (12) transparent with respect to an optical signal is put between said optical element (1) and said optical transmission medium (3a) and cured.

22. The method of manufacturing an optical module according to claim 21, **characterized in that** an ultraviolet cure type resin is used as said transparent resin agent (12) and, after said ultraviolet cure type resin is put between said optical element (1) and said optical transmission medium (3a), ultraviolet light is applied through said optical transmission medium (3a) to said ultraviolet cure type resin (12) to cure said ultraviolet cure type resin (12).

23. An electric wire formed protective component **characterized in that** an electric wiring (3b) is formed in a protective component (3) for protection of an optical transmission medium (3a) to be electrically connectable to an external circuit.

24. The electric wire formed protective component according to claim 23, **characterized in that** an electric wiring (3b) for said optical element (1) to be optically coupled to said optical transmission medium (3a) is formed in said protective component (3).

25. The electric wire formed protective component according to claim 24, **characterized in that** an electric wiring (3b) to be connected to said optical element (1) and connected to a drive circuit for driving said optical element (1) is formed in said protective component (3).

26. The electric wire formed protective component according to any one of claims 23 to 25, **characterized in that** said electric wiring (3b) is formed on a surface of said protective component (3).

27. The electric wire formed protective component according to any one of claims 23 to 26, **characterized in that** an indentation (3c) for fixedly accommodating at least a portion of said optical element (1) is made in one end surface of said protective component (3) in a direction that said optical transmission medium (3a) extends.

28. A protective component for protection of an optical transmission medium (3a), **characterized in that** an indentation (3c) is made in its end portion.

29. The protective component according to claim 28, **characterized in that** at least a portion of an optical element (1) to be optically coupled to said optical transmission medium (3a) is accommodated in said indentation (3c).
